# EUROPEAN PATENT APPLICATION

(11) **EP 2 302 574 A1**
(43) Date of publication of application: **30.03.2011**
(21) Application number: 10175737.5
(22) Date of filing: 08.09.2010
(51) Int. Cl.: G06Q 10/00

(54) **Improvements in or relating to a virtual management system and method**

(30) Priority: 10.09.2009 GB 0915863
(71) Applicant: Smart (Overseas) Incorporated, 64800 Beuste (FR)
(72) Inventor: Devereux, Steven Michael, 64800, Beuste (FR)
(74) Representative: Anderson, Angela Mary

(57) **Abstract**

A virtual management system for completing a project, wherein the project includes a function having one or more tasks associated therewith, the system comprising: a database object (**VC**) for the function, wherein the database object includes a pair of database object parts (**Struc** and **Mat**); wherein a first part of the pair of database object parts relate to a structure for the or each task and a second part of the pair of database object parts relate to a content element for the or each task; and wherein the first part undergoes an evolution in response to user input to enable improvements to be implemented for a particular function, such that the evolution applies to the particular function in any project managed by the virtual management system; and further wherein the second part can be replicated for a subsequent function to generate a subsequent database object for the subsequent function.

## Description

### Field of the invention

The present invention relates to a virtual management system and method, particularly but not exclusively in respect of evolving and replicating databases.

### Background of the invention

Virtual systems to manage various processes online already exist. In each case, the system must be designed and created "ready to use" with all the essential tasks and relationships defined. This means that the current systems require upfront investment of time and effort to define the tasks and relationships before the system can be used. Subsequent changes and improvements often force a redesign of the system.

### Objects of the invention

It is an object of the present invention to overcome at least some of the problems associated with the prior art.

It is an object of the present invention to overcome one significant difficulty inherent in the prior art; that is that a new project requires somebody to define the essential tasks and task relationships before the system can be used.

It is a further object of the present invention to provide a virtual management system that is capable of evolving and replicating through many layers of processes.

### Summary of the invention

The present invention provides a method and system as set out in the accompanying claims.

According to one aspect of the present invention there is provided a virtual management system for completing a project, wherein the project includes a function having one or more tasks associated therewith, the system comprising: a database object **(VC)** for the function, wherein the database object includes a pair of database object parts **(Struc** and **Mat);** wherein a first part of the pair of database object parts relate to a structure for the or each task and a second part of the pair of database object parts relate to a content element for the or each task; and wherein the first part undergoes an evolution in response to user input to enable improvements to be implemented for a particular function, such that the evolution applies to the particular function in any project managed by the virtual management system; and further wherein the second part can be replicated for a subsequent function to generate a subsequent database object for the subsequent function.

One key benefit to the present invention is that the project management system can be used for a new project without prior definitions of tasks and relationships as it develops as it is used, with each user participating in it's development. Another key benefit is that learning from previous experience can be incorporated into the management system in such a way that it is of benefit to all other users, allowing rapid development of the management system for a new project.

### Brief description of the drawings

Reference will now be made, by way of example, to the accompanying drawings, in which:
Figure 1 is a diagram of a virtual cell structure showing certain essential fields, in accordance with an embodiment of the invention,
Figure 2 is a diagram of an example of a virtual cell structure for a particular application, in accordance with an embodiment of the invention,
Figure 3 is a diagram of any virtual cell template for the full structure of a virtual management system, in accordance with an embodiment of the invention,
Figure 4 is a diagram of a possible graphic view of a project within a virtual management system website, in accordance with an embodiment of the invention.

### Detailed description of the preferred embodiments

A virtual management system may take many different forms and include many different databases and processes. The present invention takes a different approach to a virtual management system by developing a very simple Virtual Cell which can be developed and grown to produce the various different fields of the database or the processes associated with the virtual management system. The virtual cell is a database object and is to some extent analogous to a biological cell used to build a simple organism. As evolution occurs the cell can become fitter and more capable and perhaps adapted to a particular purpose. The cell can also replicate creating new copies as required. Evolving and replicating in this way allows a complex organism to be grown starting with a very simple single cell. The present invention works in a similar way but in a virtual management system using a database object in the form of an initial simple virtual cell **(VC).** This is a simple cell which can evolve over time into more complex structures. The **VC** evolves by becoming more capable and useful for the intended purpose. Unlike a biological cell, when the **VC** evolves, all copies of that type of **VC** also evolve, even those that are already part of a structure.

Different types of **VC** can be created (just as a stem Cell can evolve into any other kind of cell) and those different **VC** types can also evolve and replicate. Each type of **VC** has a unique name and a unique identifying code defined at creation of the cell. By designing a **VC** that is capable of evolving, replicating and creating different types, a structure of high complexity can be built over time, without the need to define every parameter from the start.

A structure of a **VC** can be replicated so that creating a new structure can be based on an existing structure, (or a part thereof) or different parts of different structures. Therefore a complex new structure that has aspects and parameters similar to an existing structure can be easily and quickly created. The evolving **VC** can be used to set up a database-based Virtual Management System to manage projects of high complexity, which learns lessons from existing aspects, parameters and projects to apply those to future projects.

The initial **VC** consists of a pair of database objects. One part of the pair in the example here is called **"Struc"** and the other part is called **"Mat".** These parts can be considered to define the structure of the **VC (Struc)** and the material it contains **(Mat).** Each **VC** is actually a set of tasks or instructions required to carry out a particular project or the functions of a project. If the project includes only one **VC** the project and the function are essentially the same. If the project includes multiple **VC**s the functions will be different to the project and will constitute the functions required to complete the project. This can be more fully understood by using an example **VC** that contains instructions to "*Frame a picture*".

While the first **VC** of any particular type starts of as a pair, each time that type of **VC** replicates, only a new **Mat** part is created. After a time, a **VC** of type "*Frame a picture*" will consist of one **"Struc"** part and many **"Mat"** parts. Thus replication only involves the **Mat** part of the **VC.**

When an improvement is identified to the "*Frame a picture*" **VC,** the **Struc** part is modified to reflect that improvement. A user having the required privileges can modify the **Struc.** When the **Struc** is changed, all existing "*Frame a picture*" **VC**s are also changed. Thus evolution only involves the **Struc** part of the **VC.**

Within the Virtual Management System, a user working with a particular **VC** can see both the **Struc** and **Mat.** The user can work with and update both the **Struc** and the **Mat.** Fields modified within the **Struc** are visible to all "*Frame a picture*" **VC**s in the system. As a consequence, the change is then visible to every **VC** of this type. Some changes to the **Struc** may require a user to have administrative privileges and this may be specified within the database.

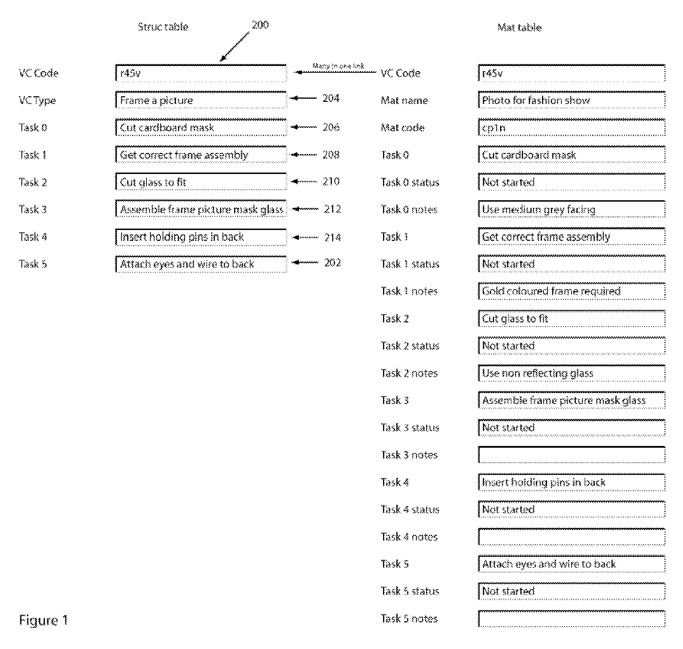

Referring to figure 1, the minimum fields necessary within the **Struc** and the **Mat** tables are defined.

The **Struc** database object 10 contains as a minimum the following fields or objects.

A **VC** Type 100 in the form of a unique alphanumeric name, which relates to the project or function associated therewith.

A **VC** Code 102 which is system assigned and may comprise four 4 digit alphanumeric input using both upper and lowercase letters. There are 62⁴ = 14,776,336 possible combinations of this type of code. If more codes are required a five digit input could be used.

A number of defined Task fields 104 and 106, each of which contain either the name of a Task, OR a link to another **VC Mat** which must be completed before the current **VC** can be completed. There may be a simple description or other appropriate identifier. If the task is linked to another **VC Mat,** then the other **VC Mat** essentially defines a sub-task. In the Virtual Management System this is referred to as a preceding **VC** as completion of the preceding **VC** is necessary before the current **VC** can be completed. The field will therefore either contain a string of alphanumeric text (in which case it is recognised by the system as a task) or a four digit alphanumeric code which matches an existing **VC** (in which case it is recognised by the system as a preceding **VC).**

It should be noted that within a conventional project management system different link types may be possible. Sometimes, one task cannot be started until a sub-task is complete. Another possible link is where a task cannot be completed until a sub-task is complete, which means that it might be possible for the task to be started before the sub-task is complete. Within the virtual management system, only one link type is currently defined; where a sub **VC** must be completed at some point before a **VC** can be completed. Each task field also has a logical field associated with it, called "Shared **Mat?"** 108. If no entry is made, a new **Mat** is created whenever needed; if an entry is made, this shows that one particular **Mat** will be used as a preceding **VC** for several different **Mats** and therefore the user will need to designate an existing **Mat** as the preceding **VC** by entering in the unique **Mat** code for that particular **Mat** into the relevant field.

The **Mat** database object 11 contains as a minimum the following fields or objects: A **VC** Code 110 which identifies this as the second part of a particular **VC.** The **Struc** and **Mat VC** codes are the same for a particular **VC.** This allows a unique link between the **Struc** database object and the **Mat** database objects for a particular **VC** Type. Each **VC** has one **Struc** database object but may have an unlimited number of **Mat** database objects.

A **Mat** Name 112 is user defined and shows what this particular **Mat** is used for.

A **Mat** Code 114 is system defined and may comprise a four digit alphanumeric code which identifies this particular **Mat** object. This code allows links to be created to one or more other **Mat** objects.

For each task 116, the text defined in **Struc** will be shown in the relevant task field. Where a new preceding **VC** is designated then a new preceding **Mat** will be created and the **Mat** code for this will be stored in the task field. If a shared **Mat** has been designated then the **VC** name will be shown in this field with a reminder that the user must replace this with the relevant **Mat** code for the shared **Mat.**

The status of each task or preceding **VC** in **Struc** 118 is shown and can typically include the following:-
a) Not started (default value)
b) Started (user modified if a Task; system modified if a link to a preceding **VC)**
c) Completed (user modified if a Task; system modified if a link to a preceding **VC)**
d) Not Applicable / Not Used (user modified)

A note 120 may also be included that the user can enter against each task that relates to that specific **Mat** only.

The **Struc** and **Mat** tables 10 and 11 both contain the system assigned **VC** code and a one-to-many relationship exists between these two fields in the **Struc** and **Mat** tables. While there is only one **Struc** table per **VC,** there can be one or many **Mat** tables. Each **Mat** table has a unique system assigned **Mat** code.

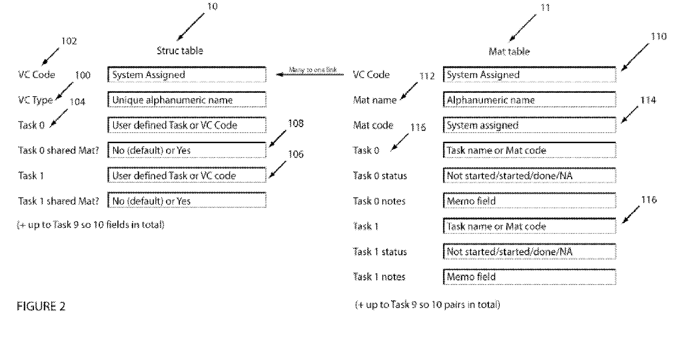

Figure 2 shows an example of what the **VC** "Frame a picture" might look like. The cell code 200 and the cell type 202 are identified. In this example there are six tasks in **Struc,** Task 0 to Task 5 (204, 206, 208, 210, 212 and 214). It could be possible to change a task to a preceding **VC** in which case Task 1 to "Get correct frame assembly" could then become a **VC** which guides the process of creating a frame from wood in stock rather than taking one off the shelf. In this way, the Virtual Management System would start off in a very simple manner (with only one **VC).** Over time it could become more refined and able to guide and track a more sophisticated approach to framing a picture.

Tasks 0-5 in this example are intended to be carried out in a sequential manner. In other words, task 0 is followed by task 1, task 1 by task 2 and so on. However this may not necessarily be true for other **VC**s. As the process develops a user may determine that an additional task may be necessary, this can be easily incorporated into **Struc** by means of either adding a task or defining a preceding **Mat.** Any changes in the new **Struc** from previous **Strucs** will be fed back to those **previous Strucs** and the matching **Mats** will be updated to show the new task or preceeding **Mat.** Figure 2 also shows the **Mat** table with a many to one link where appropriate with the **Struc.** The **Mat** table includes the cell code 216 which is the same as that of the **Struc** and the **Mat** name 218 for the particular task, for example a "photo for a fashion show". The **Mat** table also includes a **Mat** code 220 and tasks 0-5 which are identical to the tasks in the **Struc.** The **Mat** table includes information relating to the status and notes for each of the tasks, for task 0 these are shown at 222 and 224. The statuses available are the same as those described with reference to figure 1. The notes provide additional information, for example colour, type or whatever.

Other Fields can be optionally added to both **Struc** and **Mat** to make them more useful for a Virtual Management System. These include the following **Struc** fields: A fixed link to references or resources relevant to completing the **VC** which have a fixed URL or other type of link. As an example, this could be a Mathcad worksheet, a page in the system giving reference information, online training on the subject or an external web page which has a URL that won't change. A further field is a dynamic link to references or resources which require a lookup table to determine the actual URL or other type of link. These dynamic references can be classified as either regulatory or policy.

A Regulatory link will determine the jurisdiction of the project, for example from a Project master database and will then provide a link to a web page or document containing the applicable regulations, which must be followed. These may be selected from a list of links in a lookup table. This means that the lookup table must be completed before a particular regulatory link is available within the Virtual Management System.

A Policy link will determine the particular client from the Project master database and will then provide a link to a Web page or document containing the relevant client policy which should ideally be followed, but may be dispensed with where justification exists. This is selected from a list of links in a lookup table. If no record exists for the particular jurisdiction or client, then the lookup table points to a web page which states that no record exists. This can then be update by the user if necessary.

Another additional optional field is a **Struc** blog in which the system adds entries when **Struc** modifications are made showing the time, date, what caused the modification, and also to allow the modifier to add any relevant comments.

The **Struc** Guardian is another additional optional field in which the person responsible for the **VC** is indicated. Generally this person will indicate approval (or not) of proposed changes to the **VC,** bearing in mind the effect of a proposed change will have an impact throughout the system.

A persistent note may also be provided in the **VC** which is applicable to all **VC**s of this type, as opposed to notes on an individual **Mat.** A user can therefore make notes on lessons learned to help others using the same type of **VC.** Ideally this would not normally require any admin privileges.

Additional **Mat** fields may include a number of different optional **Mat** fields.

A name field called "User" may provide a link to the record of a person on the database, that person being currently responsible for completing a particular **VC.** Similarly, a name field called "Supervisor" may provide a link to the record of the supervisor of the person responsible for completing the **VC.**

A further additional optional field is the **Mat** blog which keeps a basic record of the work done for a task in a blog. The supervisor can also add to the blog. Reading the blog could also allow auditing of how, when and where the task was carried out. Also, details such as a change of user or supervisor would be recorded in the blog. Blog entries once created cannot be edited and the time and date are recorded.

Another additional optional **Mat** field is the task completed signature. The supervisor of the responsible user for a **Mat** uses this field to digitally sign that the **Mat** is complete. This contains a link to the record of the supervisor signing off the **Mat** and a time/date stamp. The **Mat** can only be signed off if all tasks and preceding **Mats** are shown as being complete.

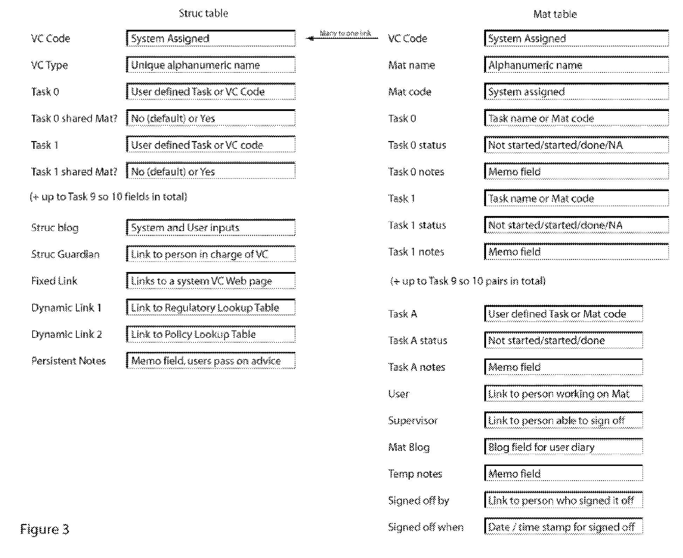

Figure 3 shows a **VC** structure suggested for a Virtual Management System which could be used to manage tasks in the oil industry. Typical tasks could be to design and program a single well and then expand this to a full field development involving many wells, platforms, production facilities etc. This will now be described in more detail.

The first objective is to build a Virtual Management System for the project in question. A project is created by defining a set of data in database objects. The project information could include many different parameters. An example is the legal jurisdiction (usually a state or country) which defines the legal regime under which the project may operate. Another example is the client (i.e. the entity paying for the Virtual Management System and the operator of the project).

Each project has a name and a system assigned unique 4 digit identification code. In the example the first project is called "Vitol Offshore Ghana". The client has a record on the database for the office responsible for the project, along with a main contact. Each person working on the project who must interface in any way with the Virtual Management System also has a record on the database. This record defines the privileges of the user when logged in to the Virtual Management System.

At least two lookup tables are created which are database objects, for example one relates to regulatory matters and the other to policy issues. Within the regulatory field there is information relating to each country in the form of a list of titles (e.g. "Well Abandonment") and a URL for each title. The URL can point to either a web page containing information and further links, or it can point direct to the regulatory requirements for the relevant information for that country.

Within the policy field for each first client there is a list of titles (e.g. "Casing Design Factors") and a URL for each title. The URL points to a system web page containing information and further links. If the client has no policy but the Project Management Contractor (PMC) does, then the URL can point to a web page explaining that in the absence of a client policy the PMC policy will apply. If both the client and PMC have policies, links to both can be given but showing that in the event of a conflict which policy would apply. This web page could also contain information on how dispensation can be requested.

Once the Project for Vitol Offshore Ghana has thus been defined, an oilfield can be created within the Project. Once an oilfield is defined, the first **VC** is created within it. In order to keep the interface simple and instinctive, a graphical view of the Project could show the high level **VC**s to the left with sub level **VC**s to the right. It is not necessary to create an oilfield until it is required or the details of the project are clear. User 1 (a Drilling Engineer) creates a field for a well design which creates a design for a well but might not include instructions for implementing that design. The first **VC** is therefore created from the blank **VC** template of figure 3 and is given the type "Well Design, Floating Rig". The system then assigns a unique 4 digit code to this **VC** Type. Within the **VC** four Tasks are defined within the **Struc.** These are: Completion Design; Casing Design; Wellhead Design; and Wellbore Fluids Design. These Tasks are stored within **Struc** because they are the same for every instance of the *Well Design, Floating Rig* **VC** type. By default the status of each of these within **Mat** is entered as "Not Started". As the tasks are not 4 digit codes, the database recognises them as text strings and treats them accordingly and at this stage it makes no difference whether the field "Shared **Mat?"** is left at the default No or changed to Yes. A fixed link is created to a template used to create a basis of well design document. Dynamic links may also be defined as the user is the **VC** creator. These dynamic links point to the lookup tables previously mentioned. Accordingly, as a starting point, for the first **VC,** the lookup tables would be completed for any relevant regulations or policies relating to the tasks created in this first **VC.** Once the data held within **Struc** is defined, then the data held within the first **Mat** can be entered.

The identity of the user is entered by the user and stored within **Mat** as this is specific to this particular **VC** and indicates who is responsible for completing this particular **VC.** By default, the creator of this **VC** is shown as the Supervisor. (Note that the Supervisor and User can change during the life of the **VC).** The Project is selected from a list of those on the Virtual Management System (which in this example is "Vitol Offshore Ghana") and the **VC** is given a name, for example, "Sankofa A" which is the name of the well to be designed.

The system assigns a unique 4 digit **Mat** code to this **Mat.** The matching **Struc** is identifiable by the Virtual Management System as both **Struc** and **Mat** share a common **VC** Code. Within the Virtual Management System, the path to this **Mat** is defined as xxxx:yyyy where xxxx is the 4 digit Project Code and yyyy is the 4 digit **Mat** Code. This path also shows the dependencies of the different elements for example where an element to the right, must be completed before one to the left of it can be completed.

The first **VC** in the Virtual Management System could not define any preceding **VC**s at the time of its creation because it was the first. Now a second **VC** can be created and associated to the first **VC.** This happens within **Struc.**

A second **VC** with the **VC** type "Casing Design" is defined. This **VC** has five tasks; "*Preliminary Design*", "*Load Case 1*", "*Load Case* 2", "*Load Case 3*" and "*Connection Selection*". Returning now to the **VC** for "*Well Design, Floating Rig*", there is a task called "Casing Design" within **Struc.** This task is now converted to a link to a preceding **VC** by entering in the **VC** Code for "*Well Design, Floating Rig*" into the field for the second **VC** and the Casing Design **VC** is now designated as this preceding **VC.** The "Shared **Mat?"** field is left at the default No. Throughout the Virtual Management System, a new Casing Design **Mat** with default values is created, one for each **Mat** of type "Well Design, Floating Rig". Each existing **Mat** of type "Well Design, Floating Rig" now has a preceding **Mat** of type Casing Design.

All tasks and preceding **VC**s must be completed before a **VC** can be signed off by the supervisor as complete. The **VC** for *Well Design, Floating Rig* now contains three Tasks (completion design, wellhead design, wellbore fluids design) and one preceding **VC** (casing design).

The path to this second **VC** within the Virtual Management System could be shown by a series of four digit codes, like xxxx:yyyy:zzzz. By replacing one of the tasks within the Well Design **VC** by another **VC,** the Virtual Management System has become more refined. Each time a new **VC** is created, tasks and / or preceding **VC**s are defined within the Virtual Management System.

The **VC** Structure Replication will now be described. A second user (an engineer) is working on the *Vitol Offshore Ghana* project and needs to start work on a second well, which will be called Sankofa B. The Virtual Management System graphical interface for the Vitol Offshore Ghana project is opened and within this project the **VC** for "*Well Design, Floating Rig*" which is named Sankofa A are available. The **VC** Code for the **VC** "*Well Design, Floating Rig*" opens the Project file and is entered as the **VC** Code into the relevant field in the project; this now becomes a preceding **VC** for the project in question.

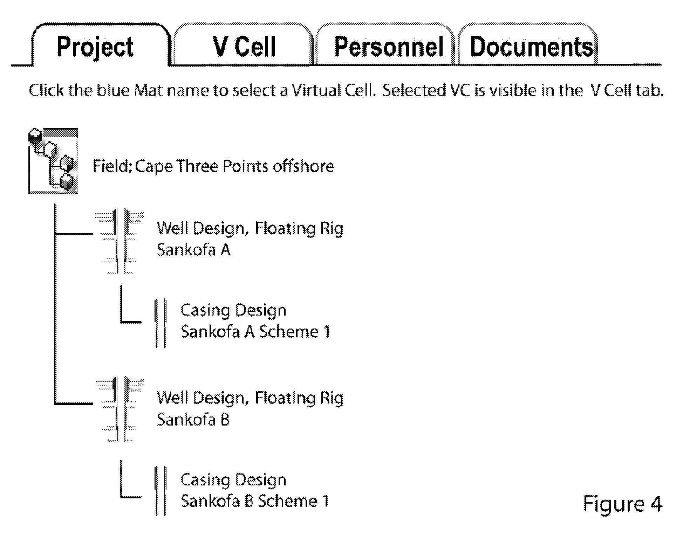

The database now creates a new **Mat** of type "*Well Design, Floating Rig*" within the project and also recreates the entire structure of this **VC** and all preceding **VC**s necessary to complete this **VC.** Each new **Mat** receives a new, unique 4 digit **Mat** code. The highest level **Mat,** the *Well Design, Floating Rig* **Mat,** is given a new name by user 2. As user 2 works through each **Mat,** the **Mat** fields have the system defaults placed in them which can be altered as necessary. The **Struc** fields visible for each **Mat** show the **Struc** level data, such as fixed and dynamic links, persistent notes, the names of each task and links to each preceding Task. Figure 4 shows how the web Virtual Management System page for the *Vitol Offshore Ghana* project might look at this stage.

Working on the Well Design **VC** user 2 realises that the **VC** can be improved. One element of Well Design is missing and that is to define the directional path of the well. User 2 has sufficient privileges to modify **Struc,** and can thus add a task to the *Well Design, Floating Rig* **VC** for Sankofa B which is called "Directional Design". This updates all **VC**s of type *Well Design, Floating Rig.* User 1 can therefore see this additional task in the Virtual Management System task for Sankofa A. If the **VC** for User 1 has not been signed off as complete then this new preceding **VC** will need to be completed (a copy of any associated **Mat** will be replicated in the Sankofa A structure as well) before the Well Design, Floating Rig **VC** can be completed.

If a change is made to a **VC Struc,** then that change is reflected in all other **VC**s of that Type. This is beneficial but must be carefully managed as the "Law of Unintended Consequences" may apply. Before any change is made all users who have unfinished **VC**s of that type should be notified of the proposed change and allowed to comment on the change before it is implemented. Also other checks may be built into the system requiring different levels of approval for changes to the fields. If a **Struc** Guardian is identified, only that user can make a change to the **Struc.** In addition, when a change is made, it will not affect a completed and signed off **VC** in a way which tags it as no longer being completed. If a **Struc** is modified to add a preceding **VC,** that preceding **VC** must already exist and a link to it can be established as one of the tasks. All modified **VC**s will then show that link and a new **Mat** will be created for each **VC** which lists it as a preceding **VC.**

Assuming User 2 identifies a further improvement to the Virtual Management System: when designing a casing for a well, the subsurface temperature profile (how the temperature changes with depth) must be known to complete the design calculations. However this information will be the same for all the wells in a given oil field and so only one **VC** to ascertain the temperature profile is needed for any number of wells in that oil field.

There is actually a choice of two actions for accomplishing this. The Casing Design **Struc** table could be modified to add a task "Ascertain temperature profile". This would add a task of that name to each Casing Design **Mat.** Alternatively a new **VC** called "Field Temperature profile" can be created and the **VC** Code for that can be entered into the Casing Design **Struc** table (Task 5) and set the "Shared **Mat?"** task 5 field is set to Yes. This would cause the Casing Design **Mat** to display at task 5 the message "Replace this with **Mat** code for "Temperature profile". A new Temperature Profile **Mat** could then be created and set as a preceding task within the Project (or Field) table, which can be modified as needed with notes etc. Then the **Mat** Code for that **Mat** it is entered into the Casing Design task 5 field. This would have to also be carried out for the casing design **Mat** for Sankofa A well in task 5.

A particular **Mat** may require a preceding **Mat** that does not create preceding **Mat**s for every instance of a **VC.** This can be done by creating a new **Mat** (from an existing **VC,** or creating a new one as necessary) then entering the **Mat** code into an empty task field within the parent **Mat.**

## Claims

1. A virtual management system for completing a project, wherein the project includes a function having one or more tasks associated therewith, the system comprising:
- a database object **(VC)** for the function, wherein the database object includes a pair of database object parts **(Struc** and **Mat);**
- wherein a first part of the pair of database object parts relate to a structure for the or each task and a second part of the pair of database object parts relate to a content element for the or each task;
- and wherein the first part undergoes an evolution in response to user input to enable improvements to be implemented for a particular function, such that the evolution applies to the particular function in any project managed by the virtual management system;
- and further wherein the second part can be replicated for a subsequent function to generate a subsequent database object for the subsequent function.

2. The system of claim 1, wherein the database objects are linked in a hierarchical manner to define an order in which the functions must be completed to complete the project.

3. The system of claim 1 or claim 2, wherein the first and second parts each include a plurality of database fields.

4. The system of claim 3, wherein at least some of the database fields relate to the or each task required for the relevant function.

5. The system of claim 3 or claim 4, wherein the database fields in the second part include a hierarchical set of tasks required to complete the function.

6. The system of any preceding claim, wherein there are multiple second parts for each first part.

7. The system of any preceding claim, where the evolution includes changes in the first part, such that all first parts of the same type for any project are updated by the evolution.

8. A method of forming a virtual management system for completing a project, wherein the project includes a function having one or more tasks associated therewith, the system comprising:
- forming a database object **(VC)** in a database for the function, wherein the database object includes a pair of database object parts **(Struc** and **Mat);**
- storing data relating to the structure of the function for the or each task in a first part of the pair of database object parts and storing data relating to the content of the or each task in a second part of the pair of database object parts;
- evolving the first part in response to user input to enable improvements to be implemented for a particular function, such that the evolution applies to the particular function in any project managed by the virtual management system;
- replicating the second part for a subsequent function to generate a subsequent database object for the subsequent function.

9. The method of claim 8, further comprising linking the database objects in a hierarchical manner to define an order in which the functions must be completed to complete the project.

10. The method of claim 8 or claim 9, further comprising providing the first and second parts with a plurality of database fields.

11. The method of claim 10, further comprising entering at least some database fields that relate to the or each task required for the relevant function.

12. The method of claim 10 or claim 11, further comprising linking the database fields in the second part into a hierarchical set of tasks required to complete the function.

13. The method of any one of claims 8 to 12, further comprising linking multiple second parts for each first part.

14. The method of any one of claims 8 to 13, where the step of evolving comprises changing the first part, such that all first parts of the same type for any project are changed.

15. A computer program comprising instructions for carrying out a method according to any of claims 8 to 14, when said computer program is executed on a programmable apparatus.
